# EUROPÄISCHE PATENTSCHRIFT

(11) **EP 0 623 810 B1**
(45) Veröffentlichungstag und Bekanntmachung des Hinweises auf die Patenterteilung: **02.09.1998**
(21) Anmeldenummer: 94106547.6
(22) Anmeldetag: 27.04.1994
(51) Int. Cl.: G01G 13/02

(54) **Wägefüllmaschine für fliess- oder schüttfähige Füllgüter**
Weigh filling machine for flowable or bulk products
Balance de remplissage pour produits en vrac ou coulables

(30) Priorität: 05.05.1993 DE 4314847
(43) Veröffentlichungstag der Anmeldung: 09.11.1994
(73) Patentinhaber: Görig Verpackungsmaschinen GmbH, 73630 Remshalden (DE)
(72) Erfinder: Görig, Rudolf, 73630 Remshalden (DE)
(74) Vertreter: Patentanwälte Rüger, Barthelt & Abel

(56) Entgegenhaltungen:
- EP-A- 0 348 077
- EP-A- 0 348 592
- EP-A- 0 353 197
- EP-A- 0 439 707
- CH-A- 655 474
- FR-A- 2 564 421
- PATENT ABSTRACTS OF JAPAN vol. 9, no. 109 (P-355) (1832) 14. Mai 1985 & JP-A-59 231 422

## Beschreibung

Die Erfindung betrifft eine Wägefüllmaschine für fließ- oder schüttfähige Füllgüter, mit einem Gestell, mit wenigstens einer an dem Gestell auf einer vorbestimmten Bahn bewegbar gelagerten Wägezelle, die zur Aufnahme zumindest eines zu befüllenden Behälters eingerichtet ist, mit einem Speicherbehälter für Füllgut sowie mit von dem Speicherbehälter abgehenden Füllgutauslaufmitteln, die der jeweiligen Wägezelle zugeordnet und auf die Füllöffnung deren Behälters ausrichtbar ausgebildet sind, mit Verschlußmitteln der Füllgutauslaufmittel sowie mit einer Steuereinrichtung zur Steuerung der Verschließmittel in Abhängigkeit von einem Gewichtssignal der jeweiligen Wägezelle zum Zwecke der gravimetrischen Dosierung des Füllgutes.

Wägeabfüllvorrichtungen oder -maschinen werden in der Praxis zum Abfüllen von schüttfähigen Gütern, beispielsweise Granulaten, Pulvern, stückigen Produkten in Verpackungsbehälter verwendet, bei denen es darauf ankommt, daß jeder Verpackungsbehälter eine genau vorbestimmte Gewichtsmenge des Füllgutes enthält. In modernen Anlagen werden die leeren Behälter in einer geordneten Reihe selbsttätig herangeführt und nach dem Abschluß des Füllvorganges beispeilsweise einer Behälterschließstation zugeführt, von der aus dann die Behälter ihrer weiteren Behandlung zugeleitet werden. Um eine hohe Durchsatzgeschwindigkeit der Behälter zu erzielen, ist eine kontinuierliche Arbeitsweise der Wägeabfüllmaschine zweckmäßig, d.h. das Füllgut wird bei auf ihrer Bahn bewegten Behältern in diese eingefüllt, was bedeutet, daß die Füllgutauslaufmittel die Bewegung der Behälter über einen für den Füllvorgang ausreichenden Abschnitt der Behälterbewegungsbahn mitmachen.

Bekannt ist es dabei, daß Füllgut in einen den jeweiligen Füllgutauslaufmitteln zugeordneten Lastbehälter einer Wiegevorrichtung einzudosieren und die abgewogene Füllgutmenge dann aus dem Lastbehälter in den zu befüllenden Behälter umzufüllen. Ein Beispiel für eine solche Vorgangsweise ist in der DE-PS 38 22 208 beschrieben.

In der Praxis gibt es aber auch Wägeabfüllmaschinen, die mit einer Anzahl von Wägezellen arbeiten, welche auf einer vorzugsweisen kreisförmigen geschlossenen Bahn bewegt werden und auf die die zu befüllenden leeren Behälter an einer Beladestation fortlaufend aufgebracht werden, während die befüllten Behälter auf einer nachgeordneten Entladestation fortlaufend von den Wägezellen wieder abgenommen und weiter gefördert werden.

Diese Wägeabfüllmaschinen sind durchweg für die Handhabung jeweils eines Füllgutes eingerichtet. Wenn das Bedürfnis besteht, in einen Behälter mehrere, insbesondere zwei verschiedene Füllgüter einzubringen oder in einzelne ausgewählte Behälter einer von einem Förderer herangeführten Behälterreihe verschiedene Füllgüter einzufüllen, so werden mehrere Wägeabfüllmaschinen erforderlich, die von den Behältern gegebenenfalls aufeinanderfolgend durchlaufen werden müssen. Außerdem ist jede dieser Wägeabfüllmaschinen in der Regel auf die Handhabung einer bestimmten Art von Füllgut, beispielsweise für körniges oder stückiges oder aber pulverförmiges Füllgut abgestellt. Während frei fließendes Füllgut (Granulate, körnige oder stückige Produkte) gravimetrisch in die Behälter eindosiert werden kann, erfordern andere nicht ohne weiteres frei fließende Füllgüter besondere Maßnahmen für die Dosierung. In der Praxis bedeutet dies, daß häufig entsprechend verschiedene Wägeabfüllmaschinen bereit gehalten werden müssen. Grundsätzlich ist es bekannt (vergleiche EP 0 353 197 A1) beim Befüllen eines Behälters mit einer dosierten Menge eines Mehrkomponenten-Füllgutes, von dem wenigstens eine Komponente aus einem flüssigen oder pasteusen Material besteht, eine Einrtchtung zu verwenden, bei der einer den Behälter aufnehmenden Wägezelle mehrere Vorrats- oder Speicherbehälter für die einzelnen Füllgutkomponenten zugeordnet sind. Füllgutauslaufkanäle dieser Vorrats- oder Speicherbehälter enthalten Absperrventile, die über einen Rechner in Abhängigkeit von Wägesignalen gesteuert sind, die von der Wägezelle beim Einfüllen der einzelnen Komponenten des Füllgutes abgegeben werden. Die Auslaufkanäle sind im Übrigen zu einen gemeinsamen Dosierkopf zusammengefasst, von dem aus die Füllgutkomponenten in den darunter angeordneten Behälter einlaufen könzen. Mit dieser Einrichtung kann aber jeweils nur ein Behälter nach dem anderen befüllt werden. Mittel zum Zu- und Abtransport der Behälter zu bzw. von der Wägezelle sind nicht geoffenbart.

Aufgabe der Erfindung ist es eine Wägeabfüllmaschine zu schaffen, die sich bei hoher Arbeitsgeschwindigkeit und genauer Füllgutsdosierung durch eine höhere Flexibilität auszeichnet.

Zur Lösung dieser Aufgabe ist die eingangs genannte Wägeabfüllmaschine erfindungsgemäß durch die Merkmale des Patentanspruchs 1 gekennzeichnet.

Die neue Wägefüllmaschine weist eine Einrichtung zum Einfüllen wenigstens eines Füllgutes zweiter Art in einen Behälter zumindest einer Wägezelle auf, wobei die Einrichtung eigene Fördermittel für dieses Füllgut enthält, die von der Steuereinrichtung zur Dosierung dieses Füllgutes gesteuert sind. Das gestattet es, zwei oder mehr verschiedene Füllgüter jeweils gleichzeitig in einen Behälter oder in vorbestimmter Reihenfolge in verschiedene Behälter einzubringen. Da die Maschine mit gravimetrischer Dosierung für ein (fließfähiges) Füllgut und mit einer Dosierung über die entsprechende Ansteuerung eines Fördermittels für ein anderes (insbesondere nicht ohne Weiteres fließfähiges) Füllgut arbeitet, ist sie für eine weite Produktpalette einsetzbar. Unabhängig von der Art der Produkte stellt sie eine gewichtsgenaue Befüllung der Behälter mit den Füllgütern sicher.

Dabei ist die Anordnung derart getroffen, daß innerhalb es kreisrunden Speicherbehälters ein erster ringförmiger Kammerbereich abgeteilt ist, der zur Aufnahme eines Füllgutes erster Art eingerichtet ist und von dem der jeweiligen Wägezelle zugeordnete erste Auslaufmittel abgehen, die mit den gesteuerten Verschlußmitteln versehen sind, während die Füllgutleiteinrichtungen für das Füllgut zweiter Art in dem Speicherbehälter dem ringförmigen Kammerbereich benachbart angeordnet sind.

Da die Füllgutleiteinrichtungen für das Füllgut zweiter Art innerhalb des Speicherbehälters für das Füllgut erster Art angeordnet sind, ergibt sich eine besonders kompakte Bauweise der Wägeabfüllmaschine.

In einer bevorzugten Ausführungsform weisen die Fördermittel für das Füllgut zweiter Art wenigstens eine angetriebene Förderschnecke auf, deren Antrieb entsprechend der jeweils einzufüllenden Füllgutmenge gesteuert ist. Dabei sind die Fördermittel durchweg ortsfest angeordnet, wobei ihnen mit der jeweiligen Wägezelle mitbewegte Füllgutleiteinrichtungen nachgeordnet sind, die mit den zweiten Füllgutauslaufmitteln in Verbindung stehen.

Mit einer Förderschnecke arbeitende Fördermittel erlauben eine sogenannte Schneckendosierung nicht nur pulver- oder mehlförmiger Produkte, die in Speicherbehältern zur Brükkenbildung neigen oder nur eine beschränkte Rieselfähigkeit aufweisen sondern sie sind auch für die Dosierung pastöser Massen geeignet.

Die Füllgutleiteinrichtungen für das Füllgut zweiter Art können eine Anzahl einlaufseitig im wesentlichen nierenförmig gestalteter Schächte nach Art von Fülltrichtern aufweisen, die in einem zweiten Ringbereich innerhalb des Speicherbehälters angeordnet sind und von denen jeder mit der jeweiligen Wägezelle zugeordneten Füllgutauslaufmitteln verbunden ist.

Abhängig von der Art des abzufüllenden Füllgutes kann es erforderlich werden, Vorkehrungen gegen eine unzulässige Staubentwicklung beim Füllvorgang zu treffen. Zu diesem Zwecke können den Füllgutauslaufmitteln Staubabsaugeeinrichtungen zugeordnet sein, die bei der erwähnten kreisrunden Ausführung des Speicherbehälters bei allen Wägezellen zumindest abschnittsweise zentral durch den Speicherbehälter durchgeführt sein können.

Um eine gewichtsgenaue Befüllung auch bei Behältern mit stark schwankendem Eigengewicht sicherzustellen, ist es von Vorteil, wenn die Wägefüllmaschine eine von jeder Wägezelle auf ihrer Bahn zu durchlaufende Station zur Bestimmung des Taragewichtes ihres Behälters aufweist, bei deren Durchlaufen die jeweilige Wägezelle an die Steuereinrichtung ein Taragewichtssignal abgibt, aus dem in der Steuereinrichtung Füllgewichtssignale für die Verschlußmittel der Füllgutauslaufmittel und/oder für die Fördermittel ableitbar sind. Bei im leeren Zustand sehr leichtgewichtigen Behältern kann der durch die Staubabsaugung örtlich hervorgerufene Unterdruck bereits zu Fehlern bei der Bestimmung des Taragewichtes führen. Um dies zu vermeiden ist es zweckmäßig, daß die Staubabsaugeeinrichtungen der einzelnen Füllgutauslaufmittel während deren Durchlauf durch die Tarastation in einem unwirksamen Zustand haltbar ausgebildet sind. In der Zeichnung ist ein Ausführungsbeispiel des Gegenstandes der Erfindung dargestellt. Es zeigen jeweils in stark vereinfachter schematischer Darstellung:
- Fig. 1: eine Wägeabfüllmaschine gemäß der Erfindung, geschnitten längs der Linie I - I der Fig. 2 in einer Seitenansicht,
- Fig. 2: die Wägeabfüllmaschine nach Fig. 1 in einer Draufsicht und
- Fig. 3: einen Ausschnitt der Wägeabfüllmaschine nach Fig. 1 zur Veranschaulichung der Zuordnung der Staubabsaugeinrichtung zu der jeweiligen Wägezelle.

Die Wägeabfüllmaschine weist ein Maschinengestell 1 mit einem Sockel 2 auf, auf dem ein um eine Vertikalachse 3 umlaufender Drehtisch (Karussel) 4 drehbar gelagert ist. Auf dem Drehtisch 4 sind gleichmäßig verteilt Wägezellen 5 angeordnet, von denen jede mit einem horizontalen Wägetisch 6 versehen ist, auf den ein zu befüllender Behälter 7 aufgesetzt werden kann.

Die Wägezellen 5 messen das Gewicht eines auf ihren Wägetisch 6 aufgesetzten Gegenstandes auf induktivem, piezoelektrischem oder anderem Wege; sie geben ein für das Gewicht dieses Gegenstandes kennzeichnendes Gewichtssignal ab, das einer bei 8 angedeuteten Steuereinheit zugeleitet wird. Die Behälter 7 sind im vorliegenden Falle jeweils in einen Träger 9 eingesetzt, der den jeweiligen Behälter 7 lagerichtig aufnimmt und es gleichzeitig erlaubt, die Wägeabfüllmaschine zur Befüllung unterschiedlich gestalteter Behälter 7 einzusetzen, ohne daß dazu Veränderungen an den Transporteinrichtungen vorgenommen werden müßten.

Oberhalb des Drehtisches 4 ist ein zu diesem koaxialer im wesentlichen zylindrischer Speicherbehälter 11 für Füllgut angeordnet, der mit dem Drehtisch 4 Uber eine im wesentlichen zylindrische Trägerkonstruktion 12 verbunden ist und deshalb die Drehbewegung des Drehtischs 4 um die Vertikalachse 3 mitmacht. In dem im Bereiche seiner Außenwand auf der Unterseite bei 13 kegelstumpfförmig abgeschrägten Speicherbehälter 11 ist durch eine eingeschweißte konzentrische, zylindrische Innenwand 1 4 eine radial außenliegende ringformige Kammer 15 abgeteilt, die zur Aufnahme eines schüttfähigen Füllgutes 16 erster Art dient.

Zum Einbringen dieses Füllgutes ist ein an einem feststehenden Rahmen 17 befestigtes vertikales Zulaufrohr 18 vorgesehen, das von oben her in die ringförmige Kammer 15 ragt und an das sich oben ein Füllgut-Zulauftrichter 19 anschließt, dem Füllgut beispielsweise aus einem Vorratsbunker zugeleitet werden kann.

An dem Speicherbehälter 11 sind bodenseitig im Bereiche der ringförmigen Kammer 15 Füllgutauslaufmittel in Gestalt von Fülltrichtern 20 angeordent, die jeweils in einen Füllgutauslaufkanal 21 münden, der auf die Füllöffnung eines zugeordneten Behälters 7 ausgerichtet ist. Die Zahl der Fülltrichter 20 entspricht der Zahl der Wägezellen 5; d.h. jeder Wägezelle 5 ist ein Fülltrichter 20 mit zugeordnetem Auslaufkanal 21 zugeordnet. Jeder Fülltrichter 20 ist auslaufseitig mit einem bei 22 angedeuteten Verschlußelement, beispielsweise in Gestalt einer Doppelklappe versehen, das von der Steuereinheit 8 im Öffnungs- und Schließsinne angesteuert werden kann.

Auf diese Weise kann abhängig von dem von der jeweiligen Wägezelle 5 abgegebenen Gewichtssignal das Füllgut 16 durch entsprechend langes Öffnen und Schließen des Verschlußelementes 22 gewichtsgenau in den jeweiligen Behälter 7 gravimetrisch eindosiert werden.

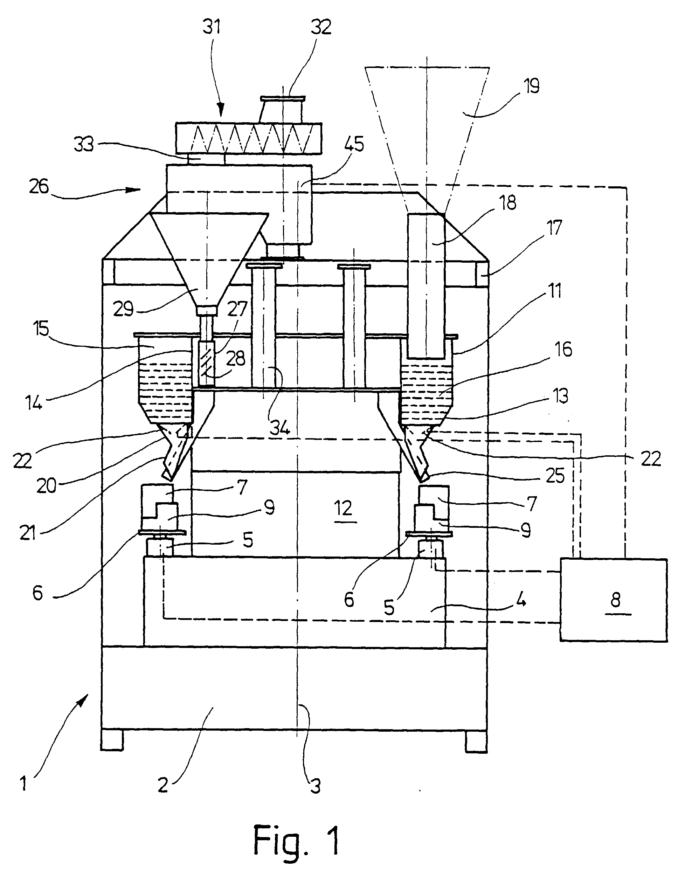

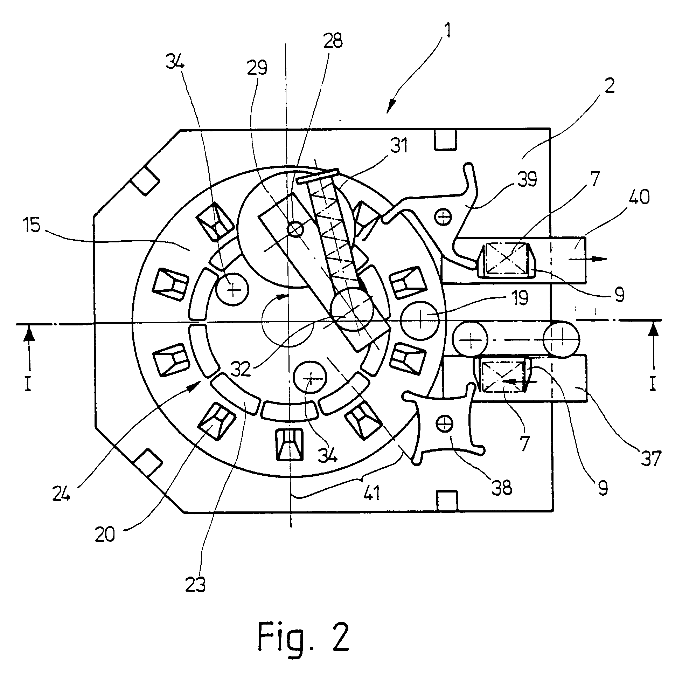

Innerhalb des Speicherbehälters 11 sind in einer der Zahl der Wägezellen 5 entsprechenden Anzahl nach Art von Fülltrichtern ausgebildete Schächte 23 angeordnet, die von steilen glattpolierten Wänden begrenzt sind und in der aus Fig. 2 ersichtlichen Weise in einem Ringbereich 24 liegen, der sich innen an die zylindrische Wand 14 anschließt. Die Füllgutleiteinrichtungen für ein Füllgut zweiter Art bildenden Schächte 23 sind einlaufseitig, d.h. oben, jeweils im wesentlichen nierenförmig gestaltet und laufen auf ihrer Unterseite zu einem Auslaufrohr 25 zusammen, das unmittelbar neben einem Auslaufkanal 21 für das Füllgut erster Art mündet, derart, daß beide Füllgüter gleichzeitig in einen auf einer Wägezelle 5 stehenden Behälter 7 eingefüllt werden können. Wie Fig. 1 zeigt, weisen das Auslaufrohr 25 und Auslaufkanal 21 etwa die gleiche Schräglage bezüglich der Vertikalachse 3 auf, von der aus gesehen sie radial nach außen zu münden.

Oberhalb des Ringbereiches 24 sind an dem Rahmen 17 befestigte und damit ortsfeste Fördermittel 26 für das Füllgut zweiter Art angeordnet. Dieses Füllgut zweiter Art ist ein vorzugsweise nicht frei fließendes Produkt, beispielsweise Mehl, Kakaopulver, Kaffeemehl und dergleichen. Es kann aber auch in Gestalt einer pastösen Masse vorliegen.

Die Fördermittel 26 weisen eine in einem entsprechenden rohrförmigen zylindrischen Gehäuse 27 umlaufende angetriebene Förderschnecke 28 auf, die das Füllgut aus einem einlaufseitig dem Gehäuse 27 vorgeschalteten, trichterförmigen Vorratsbehälter 29 fördert, dessen Aufgabe insbesondere darin besteht, übermäßige Gewichtsschwankungen am Eingang der Förderschnecke 18 zu vermeiden und damit Dosierungsfehler gering zu halten. Der Durchmesser der Förderschnecke 28 und des Gehäuses 27 sind kleiner als die radiale Weite der Schächte 23 im Bereiche der nierenförmigen Einlaßseite; sie sind derart vertikal angeordnet, daß das von der Förderschnecke 28 geförderte Füllgut frei in den jeweils darunter liegenden Füllschacht 20 fallen kann, von dem aus es durch das Auslaufrohr 25 in den jeweiligen Behälter 7 gelangt.

Oberhalb des Vorratsbehälters 29 ist an dem Rahmen 17 ein mit einer zweiten Förderschnecke 30 arbeitender Schneckendosierer 31 angeordnet, dessen Füllgutzulaufstutzen mit 32 bezeichnet ist und dessen Drehachse horizontal ausgerichtet ist. Das von dem Schneckendosierer 31 geförderte Füllgut gelangt über einen Auslaufstutzen 33 unmittelbar in den trichterförmigen Vorratsbehälter 29.

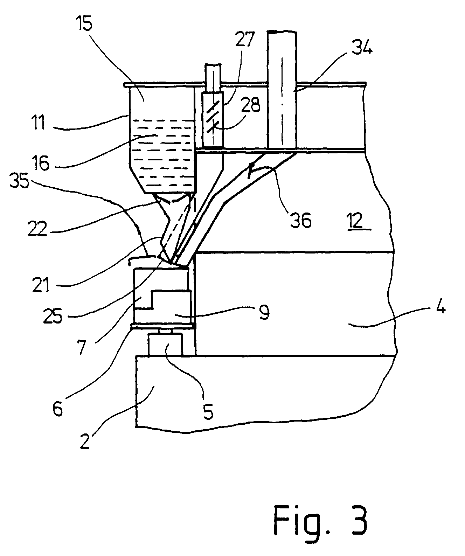

Innerhalb des von dem Vorratsbehälter 11 umschlossenen Raumes und innerhalb des Ringbereiches 24 sind drei gleichmäßig verteilt angeordnete vertikale Staubabsaugkanäle 34 vorgesehen, die Teile einer Staubabsaugeeinrichtung bilden, welche mit den Absaugekanälen 34 in Verbindung stehende Staubabsaugehauben 35 aufweist, deren Zahl der Anzahl der Wägezellen 5 entspricht und die in der aus Fig. 3 ersichtlichen Weise im Bereiche der Mündung des jeweiligen Auslaufkanales 21 und des Auslaufrohres 25 oberhalb der Füllöffnung des jeweils auf einem Wägetisch 6 stehenden Behälters 7 angeordnet sind. Über die Staubabsaughauben 35 wird verhindert, daß beim Einfüllen der Füllgüter in die Behälter 7 freiwerdender Staub zu einer die Umgebung beeinträchtigenden Staubentwicklung führt.

Den Staubabsaugrohren 34 und/oder den Staubabsaughauben 35 sind eigene Drosselmittel zugeordnet, wie sie schematisch bei 36 angedeutet sind und die Aufgabe haben, die Staubabsaugung vorübergehend abschalten oder zumindest in ihrer Wirkung vermindern zu können.

Dem Drehtisch 4 sind in der aus Fig. 2 ersichtlichen Weise ein Einlaufförderband 37 und ein Einlaufstern 38 für leere Behälter 7 sowie ein Auslaufstern 39 und ein Auslaufförderband 40 für gefüllte Behälter 7 zugeordnet.

Die insoweit beschriebene Wägeabfüllmaschine arbeitet wie folgt:

Auf dem Einlaufförderband 37 in einer Reihe hintereinander herangeführte leere Behälter 7, von denen jeder in einem Träger 9 aufgenommen ist, werden von dem Einlaufstern 38 vereinzelt und einzeln jeweils auf einen Wägetisch 6 des bezogen auf Fig. 2 im Uhrzeigersinn umlaufenden Drehtisches 4 lagerichtig aufgegeben. Der aufgegebene leere Behälter 7 wird auf der durch den Drehtisch 4 vorgegebenen kreisförmigen Bahn zunächst durch eine Taraermittlungsstation 41 bewegt, die einem Zentriwinkelbereich von ca. 30° entspricht. Beim Durchlaufen dieses Winkelbereiches gibt die Wägezelle 5 ein für das Taragewicht des Behälters 7 und dessen Träger 9 kennzeichnendes Signal an die Steuereinheit 8 ab. Um zu vermeiden, daß insbesondere bei leichtgewichtigen Behältern 7 die Ermittlung des Taragewichtes fehlerhaft wird, ist die Staubabsaugung in diesem Bereich abgeschaltet oder in ihrer Wirkung vermindert. Dies kann gegebenenfalls von der Steuereinheit 8 durch entsprechende Ansteuerung der Drosselmittel 36 veranlaßt werden.

Mit dem Verlassen der Taragewichts-Bestimmungsstation 41 gelangt der Behälter 7 in den eigentlichen Füllbereich der sich über über einen Zentriwinkel von ca. 220° erstreckt. Gesteuert von der Steuereinheit 8 wird der Behälter beim Durchlaufen dieses Füllbereichs in Abhängigkeit von dem von der Wägezelle 5 abgegebenen Gewichtssignal unter Berücksichtigung des ermittelten Taragewichtes mit der jeweils gewünschten Menge von Füllgut erster und zweiter Art befüllt. Dabei wird das Füllgut erster Art durch entsprechende Ansteuerung des Verschlußorganes 22 gravimetrisch eindosiert, während die Eindosierung des Füllgutes zweiter Art durch entsprechende Ansteuerung des Schneckendosierers 31 und insbesondere der Förderschnecke 28 erfolgt.

Abhängig von der Art der Füllgüter können die gravimetrische und die Schneckendosierung gleichzeitig oder zeitlich hintereinander erfolgen. In dem einen Fall erfolgt eine Vermischung der beiden Füllgüter beim Einfüllen in den Behälter 7; im anderen Fall wird in dem Behälter eine Schichtung der Füllgüter erzielt.

Grundsätzlich ist es auch möglich, durch entsprechende Programmierung der Steuereinheit 8 die Wägefüllmaschine in der Weise zu betreiben, daß die den Füllbereich durchlaufenden Behälter 7 abwechselnd oder gruppenweise mit dem einen und/oder dem anderen Füllgut befüllt werden.

Die beim Verlassen des Füllbereiches gefüllten Behälter 7 werden von dem Auslaufstern 39 von den Wägetischen 7 der Wägezellen 5 abgenommen und auf das Auslaufförderband 40 geschoben, das sie in einer Reihe der nächstfolgenden Weiterbehandlungsstation, beispielsweise einer Deckelschließstation, zuführt.

Die Wägefüllmaschine arbeitet in der Regel kontinuierlich, d.h. die Behälter 7 durchlaufen in einer kontinuierlichen Bewegung den Füllbereich und - falls vorhanden - die Station 41 zur Bestimmung des Taragewichts. Die Befüllung der Behälter geschieht, wie beschrieben, während ihrer Bewegung, was im gleichen Maße auch für die Bestimmung des Taragewichtes gilt. Grundsätzlich sind aber auch Fälle denkbar, bei denen aus besonderen Gründen die Maschinen diskontinuierlich arbeitet, d.h. die Behälter 7 durchgetaktet werden. In diesem Falle stehen die Behälter zumindest während eines Teiles des Füllvorganges still.

## Patentansprüche

1. Wägefüllmaschine für fließ-und schüttfähige Füllgüter, mit einem Gestell (1), mit wenigstens einer an dem Gestell auf einer vorbestimmten Bahn bewegbar gelagerten Wägezelle (5), die zur Aufnahme zumindest eines zu befüllenden Behälters eingerichtet ist, mit einem kreisrunden Speicherbehälter (11) für Füllgut sowie mit von dem Speicherbehälter abgehenden Füllgutauslaufmitteln (21), die der Wägezelle zugeordnet und auf die Füllöffnung deren Behälters ausrichtbar ausgebildet sind, mit Verschlußmitteln (22) der Füllgutauslaufmittel sowie mit einer Steuereinrichtung (8) zur Steuerung der Verschlußmittel in Abhängigkeit von einem Gewichtssignal der Wägezelle zum Zwecke der gravimetrischen Dosierung des Füllgutes, dadurch gekennzeichnet,
- dass innerhalb des kreisrunden Speicherbehälters (11) ein erster ringförmiger Kammerbereich (15) abgeteilt ist, der zur Aufnahme eines Füllgutes (16) erster Art eingerichtet ist und von dem erste Füllgutauslaufmittel (21) abgehen,
- dass sie eine Einrichtung (23, 25, 26) zum Einfüllen wenigstens eines Füllgutes zweiter Art in einen Behälter zumindest einer Wägezelle aufweist,
- dass die Einrichtung eigene Fördermittel (26) für das Füllgut zweiter Art enthält, die von der Steuereinrichtung (8) zur Dosierung dieses Füllgutes ansteuerbar sind,
und denen Füllgutleiteinrichtungen (23) nachgeordnet sind, die mit mit zweiten Füllgutauslaufmitteln (25) in Verbindung stehen und
- dass die Füllgutleiteinrichtungen (23) für das Füllgut zweiter Art in dem Speicherbehälter (11) dem ringförmigen Kammerbereich (15) benachbart angeordnet sind.

2. Wägefüllmaschine nach Anspruch 1, dadurch gekennzeichnet, dass die Fördermittel wenigstens eine angetriebene Förderschnecke (28; 30) aufweisen, deren Antrieb entsprechend der jeweils einzufüllenden Füllgutmenge gesteuert ist.

3. Wägefüllmaschine nach Anspruch 1 oder 2, dadurch gekennzeichnet, dass die Fördermittel (26) ortsfest angeordnet sind und ihnen mit der Wägezelle (5) mitbewegte Füllgutleiteinrichtungen (23) nachgeordnet sind, die mit den zweiten Füllgutauslaufmitteln (25) in Verbindung stehen.

4. Wägefüllmaschine nach einem der vorhergehenden Ansprüche, dadurch gekennzeichnet, dass die ortsfesten Fördermittel (31) oberhalb der Füllgutleiteinrichtungen (23) vorgesehen sind.

5. Wägefüllmaschine nach Anspruch 4, dadurch gekennzeichnet, dass die Füllgutleiteinrichtungen eine Anzahl einlaufseitig im Wesentlichen nierenförmig gestalteter Schächte (22) nach Art von Fülltrichtern aufweisen, die in einem zweiten Ringbereich (24) innerhalb des Speicherbehälters (11) angeordnet sind und von denen jeder mit jeweils einer Wägezelle (5) zugeordneten, zweiten Füllgutauslaufmitteln (25) verbunden ist.

6. Wägefüllmaschine nach einem der vorhergehenden Ansprüche, dadurch gekennzeichnet, dass den Füllgutauslaufmitteln (21; 25) Staubabsaugeeinrichtungen (34, 35) zugeordnet sind.

7. Wägefüllmaschine nach dem Anspruch 6, dadurch gekennzeichnet, dass die Staubabsaugeeinrichtungen der Füllgutauslaufmittel (21, 25) aller Wägezellen (5) zumindest abschnittsweise (bei 34) zentral durch den Speicherbehälter (11) durchgeführt sind.

8. Wägefüllmaschine nach einem der vorhergehenden Ansprüche, dadurch gekennzeichnet, dass sie eine von jeder Wägezelle (5) auf ihrer Bahn zu durchlaufende Station (41) zur Bestimmung des Taragewichtes ihres Behälters (7) aufweist, bei deren Durchlaufen die jeweilige Wägezelle (5) an die Steuereinrichtung (8) ein Taragewichtssignal abgibt, aus dem in der Steuereinrichtung (8) Füllgewichtssignale für die Verschlußmittel (22) der Füllgutauslaufmittel (21) und/oder für die Fördermittel (26) ableitbar sind.

9. Wägefüllmaschine nach den Ansprüchen 6 und 8, dadurch gekennzeichnet, dass die Staubabsaugeeinrichtungen (35) der einzelnen Füllgutauslaufmittel (21; 25) während deren Durchlaufs durch die Tarastation (41) in einem unwirksamen zustand haltbar ausgebildet sind.

## Claims

1. Weighing filling machine for flowable and bulk filling materials, with a frame (1), with at least one weighing cell (5), which is mounted on the frame to be movable on a predetermined path and is fitted to receive at least one container to be filled, with a circular storage container (11) for filling material as well as with discharge means (21) for the filling material exiting from the storage container, said discharge means being allocated to the weighing cell and constructed for alignment to the filling opening of its container, with closing elements (22) of the filling material discharge means as well as with a control means (8) for controlling the closing elements in dependence upon a weight signal of the weighing cell for the purpose of gravimetric metering of the filling material, characterised in
- that inside the circular storage container (11), a first ring-shaped chamber region (15) is partitioned, which is fitted to receive a filling material (16) of a first type and from which exit first filling material discharge means (21),
- that it has an arrangement (23, 25, 26) for feeding at least one filling material of a second type into a container of at least one weighing cell,
- that the arrangement contains its own transport means (26) for the filling material of the second type, which may be actuated by the control means (8) for metering this filling material, and downstream of which filling material guide means (23) are arranged which connect to second filling material discharge means (25),
- that the filling material guide means (23) for the filling material of the second type are arranged adjacent to the ring-shaped chamber region (15) in the storage container (11).

2. Weighing filling machine according to Claim 1, characterised in that the transport means have at least one driven worm conveyor (28; 30), the drive of which is controlled in accordance with the respective amount of filling material to be fed in.

3. Weighing filling machine according to Claim 1 or 2, characterised in that the transport means (26) are arranged to be fixed and arranged downstream of them are filling material guide means (23) moved together with the weighing cell (5) and connecting to the second filling material discharge means (25).

4. Weighing filling machine according to one of the preceding claims, characterised in that the fixed transport means (31) are provided above the filling material guide means (23).

5. Weighing filling machine according to Claim 4, characterised in that the filling material guide means have a number of essentially kidney-shaped shafts (22) in the manner of filling hoppers on the inlet side, which are arranged in a second ring region (24) inside the storage container (11), and each of which is connected to the second filling material discharge means (25) respectively allocated to a weighing cell (5).

6. Weighing filling machine according to one of the preceding claims, characterised in that dust extraction means (34, 35) are allocated to the filling material discharge means (21; 25).

7. Weighing filling machine according to Claim 6, characterised in that the dust extraction means of the filling material discharge means (21, 25) of all the weighing cells (5) are passed centrally through the storage container (11) at least in sections (at 34).

8. Weighing filling machine according to one of the preceding claims, characterised in that it has a station (41) to be passed through by each weighing cell (5) on its path to determine the tare of its container (7), and when this is passed through the respective weighing cell (5) transmits a tare signal to the control means (8), from which filling weight signals for the closing elements (22) of the filling material discharge means (21) and/or for the transport means (26) may be derived in the control means (8).

9. Weighing filling machine according to Claims 6 and 8, characterised in that the dust extraction means (35) of the individual filling material discharge means (21; 25) are constructed to be retained in an inactive state during their passage through the tare station (41).

## Revendications

1. Machine de remplissage à pesage pour des produits fluides et des produits en vrac, avec un bâti (1), avec au moins une cellule de pesage (5) qui est montée sur le bâti avec possibilité de déplacement suivant une trajectoire prédéterminée et est agencée pour recevoir au moins un contenant à remplir, avec un réservoir (11) circulaire pour le produit de remplissage ainsi qu'avec des moyens de sortie de produit de remplissage (21) qui partent du réservoir, sont associés à la cellule de pesage et sont conçus de manière à pouvoir être dirigés vers l'ouverture de remplissage du contenant à remplir, avec des moyens de fermeture (22) des moyens de sortie de produit de remplissage et avec un dispositif de commande (8) pour commander les moyens de fermeture en fonction d'un signal de poids délivré par la cellule de pesage à des fins de dosage gravimétrique du produit de remplissage, caractérisée par le fait
- qu'une première chambre annulaire (15) est formée à l'intérieur du réservoir (11) circulaire, chambre qui est agencée pour recevoir un produit de remplissage (16) d'un premier type et de laquelle partent des premiers moyens de sortie de produit de remplissage (21),
- qu'elle comporte un dispositif (23, 25, 26) pour charger au moins un produit de remplissage d'un deuxième type dans un contenant d'au moins une cellule de pesage,
- que le dispositif comporte des moyens de transport (26) propres pour le produit de remplissage du deuxième type, qui peuvent être commandés par le dispositif de commande (8) à des fins de dosage dudit produit de remplissage et
à la suite desquels sont disposés des dispositifs de guidage de produit de remplissage (23) qui communiquent avec des seconds moyens de sortie de produit de remplissage (25) et
- que les dispositifs de guidage (23) pour le produit de remplissage de deuxième type sont disposés dans le réservoir (11) dans le voisinage de la chambre annulaire (15).

2. Machine de remplissage à pesage selon la revendication 1, caractérisée par le fait que les moyens de transport comportent au moins une vis transporteuse (28, 30) entraînée, dont l'entraînement est commandé en fonction de la quantité de produit de remplissage à charger chaque fois.

3. Machine de remplissage à pesage selon la revendication 1 ou 2, caractérisée par le fait que les moyens de transport (26) sont stationnaires et que des moyens de guidage de produit de remplissage (23) qui se déplacent avec la cellule de pesage (5) sont disposés à la suite de ceux-ci, lesquels moyens de guidage communiquent avec les seconds moyens de sortie de produit de remplissage (25).

4. Machine de remplissage à pesage selon une des revendications précédentes, caractérisée par le fait que les moyens de transport (31) stationnaires sont prévus au-dessus des moyens de guidage de produit de remplissage (23).

5. Machine de remplissage à pesage selon la revendication 4, caractérisée par le fait que les moyens de guidage de produit de remplissage présentent un certain nombre de trémies (22) de type trémies de chargement, avec une entrée essentiellement réniforme, qui sont disposées dans une deuxième zone annulaire (24) à l'intérieur du réservoir (11) et qui communiquent chacune avec des seconds moyens de sortie de produit de remplissage (25) associés chaque fois à une cellule de pesage (5).

6. Machine de remplissage à pesage selon une des revendications précédentes, caractérisée par le fait que des dispositifs d'aspiration de poussière (34, 35) sont associés aux moyens de sortie de produit de remplissage (21, 25).

7. Machine de remplissage à pesage selon la revendication 6, caractérisée par le fait que les dispositifs d'aspiration de poussière des moyens de sortie de produit de remplissage (21, 25) de toutes les cellules de pesage (5) sont disposés au moins partiellement (en 34) dans la région centrale du réservoir (11).

8. Machine de remplissage à pesage selon une des revendications précédentes, caractérisée par le fait qu'elle comporte un poste (41) par lequel chaque cellule de pesage (5) transite au cours de son déplacement, pour déterminer la tare du contenant placé sur ladite cellule, et lors de la traversée duquel la cellule de pesage (5) concernée délivre au dispositif de commande (8), un signal de tare à partir duquel des signaux de poids de remplissage pour les moyens de fermeture (22) des moyens de sortie de produit de remplissage (21) et/ou les moyens de transport (26) peuvent être dérivés dans le dispositif de commande (8).

9. Machine de remplissage à pesage selon les revendications 6 et 8, caractérisée par le fait que les dispositifs d'aspiration de poussière (35) des différents moyens de sortie de produit de remplissage (21, 25) sont conçus de manière à pouvoir être maintenus dans un état de non activité lors de leur passage dans le poste de tarage (41).
